# EUROPÄISCHE PATENTSCHRIFT

(11) **EP 1 045 209 B1**
(45) Veröffentlichungstag und Bekanntmachung des Hinweises auf die Patenterteilung: **23.07.2003**
(21) Anmeldenummer: 00890110.0
(22) Anmeldetag: 07.04.2000
(51) Int. Cl.: F24D 3/10, F16L 37/252

(54) **Verteiler**
Manifold
Distributeur

(30) Priorität: 16.04.1999 AT 25699 U
(43) Veröffentlichungstag der Anmeldung: 18.10.2000
(73) Patentinhaber: Multitherm Fussboden-Heizung GmbH u. Co. KG., 1232 Wien (AT)
(72) Erfinder: Klampfer, Johann, 1140 Wien (AT)
(74) Vertreter: KLIMENT & HENHAPEL

(56) Entgegenhaltungen:
- DE-A- 19 700 481
- DE-U- 9 412 852
- DE-U- 29 817 972
- FR-A- 2 658 899
- US-A- 3 413 018

## Beschreibung

Die Erfindung bezieht sich auf einen Verteiler gemäß dem Oberbegriff des Anspruches 1.

Ein solcher Verteiler wurde z.B. durch die AT 487 U1 bekannt.

Bei diesem bekannten Verteiler können mehrere Gehäuse mit ihren Ansätzen in die Erweiterung des Hauptkanals des jeweils benachbarten Gehäuses eingesteckt werden. Zur gegenseitigen Lagesicherung und zur Sicherung des Zusammenhalts zweier Gehäuse sind an den Stirnseiten der Gehäuse und an deren Mantelflächen offene Ausnehmungen vorgesehen, die im Abstand von der zugehörigen Stirnseite eine Erweiterung aufweisen. In die Ausnehmungen zweier benachbarter Gehäuse werden dabei "hundeknochenartig" geformte Plättchen im wesentlichen senkrecht zu den Mantelflächen der Gehäuse eingedrückt.

Dabei ergibt sich jedoch der Nachteil, daß die Ausnehmungen und die Plättchen mit einer entsprechend hohen Genauigkeit hergestellt werden müssen, um einen sicheren Zusammenhalt der Gehäuse sicherzustellen und unerwünschte gegenseitige Bewegungen der Gehäuse eines Verteilers zu vermeiden.

Weiters ergibt sich bei einer solchen Lösung der Nachteil, daß bei der Montage vor Ort die Plättchen leicht verloren gehen können, insbesondere auf größeren Baustellen und dann mit der Montage erst fortgesetzt werden kann, wenn wieder neue Plättchen herbeigeschafft sind.

Ziel der Erfindung ist es, diese Nachteile zu vermeiden und einen Verteiler der eingangs erwähnten Art vorzuschlagen, bei dem die einzelnen Gehäuse rasch miteinander verbunden werden können und bei dem die Gefahr des Verlustes wesentlicher Teile bei der Montage vermieden ist.

Erfindungsgemäß wird dies bei einem Verteiler der eingangs erwähnten Art durch die kennzeichnenden Merkmale des Anspruches 1 erreicht.

Durch die vorgeschlagenen Maßnahme ist es auf einfache Weise möglich die Gehäuse zu einem Verteiler miteinander zu verbinden, wobei es genügt die jeweils zu verbindenden Gehäuse ineinander zu stecken und gegeneinander zu verdrehen.

Dabei können die im wesentlichen in Umfangsrichtung verlaufenden Abschnitte der Ausnehmungen der Innenwand der Erweiterung des Hauptkanals der Gehäuse eine geringe Steigung aufweisen, sodaß sich ein kraftschlüssiger Bajonettverschluß ergibt. Allerdings ergibt sich in einem solchen Fall die Notwendigkeit der Einhaltung relativ enger Toleranzen, um größere Lageabweichungen, insbesondere eine gegenseitig verdrehte Lage zweier miteinander verbundener Gehäuse zu vermeiden.

Durch die Merkmale des Anspruches 2 ergibt sich der Vorteil einer gegenseitigen Lagesicherung zweier miteinander verbundener Gehäuse eines Verteilers. Dabei kann auf eine Steigung der im wesentlichen in Umfangsrichtung verlaufenden Abschnitte der Innenwand der Erweiterung der Gehäuse verzichtet werden, wobei die Rastnasen und Rastvertiefungen die gegenseitig Lage der beiden miteinander verbundenen Gehäuse bestimmen. Durch das Einrasten wird auch ein hohes Maß an Sicherheit gegen ein unbeabsichtigtes Lösen der Verbindung, z.B. aufgrund von Vibrationen erreicht, da es eben beim einrasten zu einer geringfügigen elastischen Verformung der Gehäuse kommt.

Zur weiteren Lagesicherung der Gehäuse können die Merkmale des Anspruches 3 vorgesehen sein. Das Einsetzen der Sicherungsplättchen stellt jedoch lediglich eine zusätzliche Sicherung dar und ist nicht unbedingt erforderlich, sodaß ein Verlust solcher Sicherungsplättchen bei der Montage vor Ort, die weitere Montage keineswegs beeinträchtigt und die Sicherungsplättchen auch erst nach Fertigstellung eines erfindungsgemäßen Verteilers eingesetzt werden können.

Die Erfindung wird nun anhand der Zeichnung näher erläutert. Dabei zeigen:
Fig. 1 schematisch eine Explosionsdarstellung eines erfindungsgemäßen Verteilers
Fig. 2 eine Stirnansicht eines Gehäuses,
Fig. 3 ein Draufsicht auf ein Gehäuse und
Fig. 4 ein Detail eines Gehäuses.

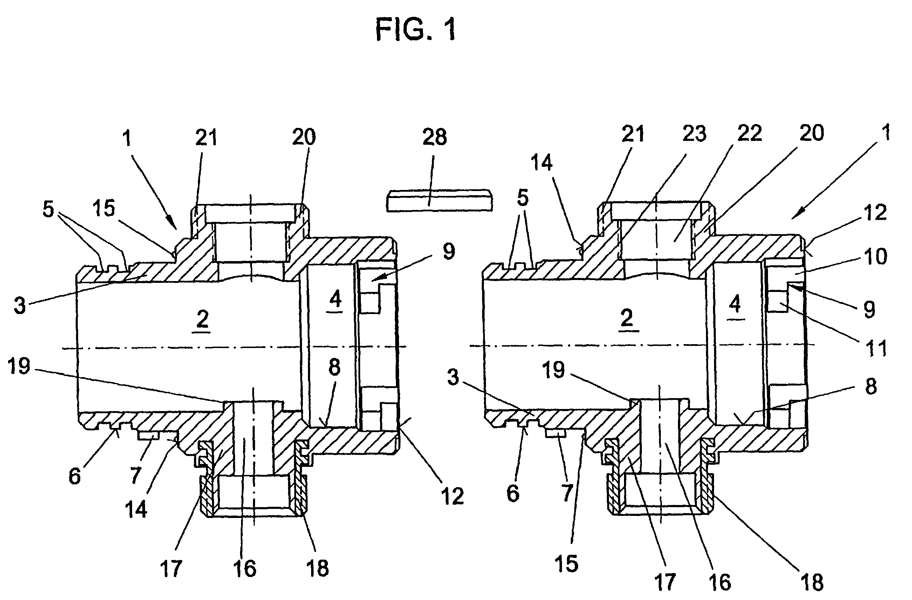

Die Fig. 1 zeigt eine Explosionsdarstellung zweier Gehäuse 1 eines erfindungsgemäßen Verteilers, wobei die Gehäuses 1 zur Aufnahme eines nicht dargestellten Ventiles oder Durchflußmessers vorgesehen sind.

Die Gehäuse 1 sind aus Kunststoff hergestellt und weisen einen durchgehenden Hauptkanal 2 auf, der sich an einer Seite durch einen sich in axialer Richtung erstreckenden Ansatz 3 hindurch erstreckt und an der zweiten Seite eine Erweiterung 4 aufweist.

In diese Erweiterung 4 ist der Ansatz 3 eines benachbarten Gehäuses 1 einsteckbar, wobei der Ansatz 3 mit vorzugsweise zwei umlaufenden Nuten 5 an seiner Mantelfläche 6 versehen ist, die zur Aufnahme von nicht dargestellten Dichtringen, insbesondere O-Ringen dienen.

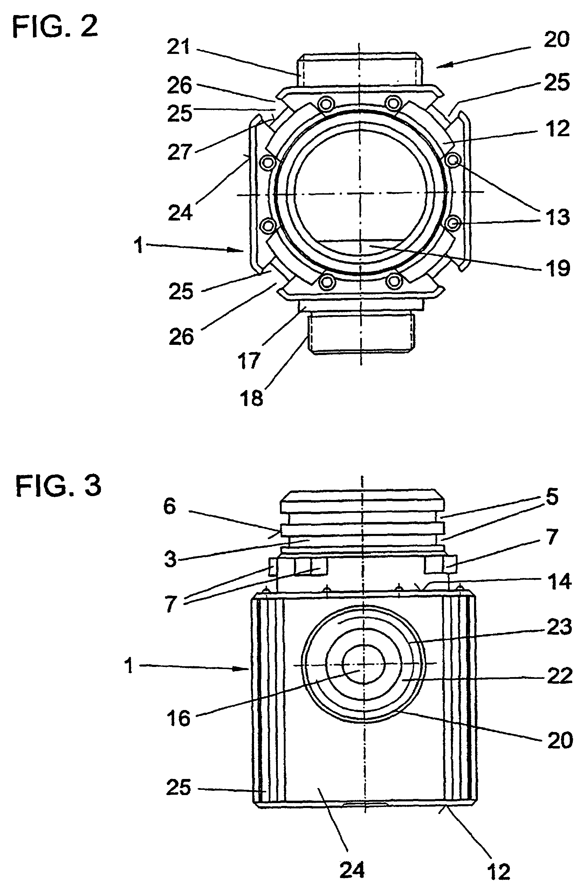

Wie insbesondere aus der Fig. 3 zu ersehen ist, ist der Ansatz 3 mit radial abstehenden Nocken 7 versehen, die mit in die Innenwand 8 der Erweiterung 4 eingearbeitete Ausnehmungen 9 zusammenwirken und gemeinsam einen Bajonettverschluß bilden.

Dabei weisen die Ausnehmungen 9 einen an der Stirnseite offenen und sich in axialer Richtung des Hauptkanals 2 erstreckenden Abschnitt 10 und einen an diesen anschließenden und sich in Umfangsrichtung erstreckenden Abschnitt 11 auf. Gemeinsam mit den Nocken 7 7 bilden die Ausnehmungen 9 einen formschlüssigen Bajonettverschluß.

Zur Sicherung der Lage je zweier miteinander verbundener Gehäuse 1 ist die vom Ansatz 3 abgekehrte Stirnseite 12 des Gehäuses 1 mit Rastvertiefungen 13 (Fig. 2) versehen, in die an der gegenüberliegenden Stirnseite 14 angeordnete Rastnasen 15 unter elastischer Verformung der Gehäuse 1 einrasten, wenn zwei Gehäuse 1 mittels ihres Bajonettverschlusses 7, 9 ordnungsgemäß miteinander verbunden sind.

Die Gehäuse 1 weisen einen Querkanal 16 auf der einen radial abstehenden Ansatz 17 durchsetzt und in den Hauptkanal 2 im Bereich einer Abflachung 19 mündet. In diesen Ansatz 17 ist eine mit einem Außengewinde versehenen Gewindebuchse 18 eingegossen, die einen Anschluß einer Leitung mittels einer Überwurfmutter ermöglicht.

Axial dem Querkanal 16 gegenüberliegend ist ein weiterer zum Hauptkanal 2 radial abstehender Ansatz 20 vorgesehen, der mit einem Außengewinde 21 versehen ist und der eine mit dem Querkanal 16 fluchtende Bohrung 22 aufweist, die in den Hauptkanal 2 mündet. Dabei ist die Bohrung 22 mit einem Innengewinde 23 versehen, das zur Aufnahme eines nicht dargestellten Durchflußmessers oder eines Ventiles, bzw. der Halterung eines Ventilkörpers dient, mit dem der Querkanal 16 abgeschlossen werden kann. Das Außengewinde 21 dient dabei zur Aufnahme einer nicht dargestellten Abdeckhaube für einen Durchflußmesser oder eines Ventiles.

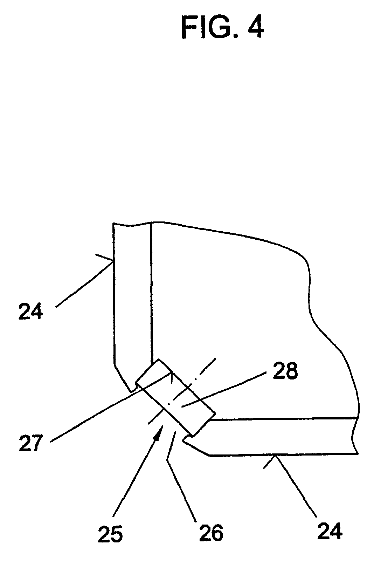

Wie insbesondere aus den Fig. 2 und 3 zu ersehen ist, weisen die Gehäuse 1 in deren Mantelflächen 24 eingearbeitete durchgehende Nuten 25 auf. Diese Nuten 25 weisen im Bereich ihrer Nutöffnung 26 eine geringfügig geringere Breite als im Bereich ihres Nutgrundes 27 auf (Fig. 4).

In diese Nuten 25 sind zur Sicherung der gegenseitigen Lage der miteinander verbunden Gehäuse 1 Sicherungsplättchen 28 im wesentlichen senkrecht zum Grund 27 der Nuten 25 einsetzbar, deren Breite der Breite des Nutgrundes 27 entspricht. Dabei erstrecken sich die Sicherungsplättchen 28 von der Nut 25 des einen Gehäuses 1 in die entsprechende Nut 25 des benachbarten Gehäuses 1, wie dies schematisch in der Fig. 1 angedeutet ist.

Die Sicherungsplättchen 28 weisen, wie aus der Fig. 4 zu ersehen ist, eine Höhe auf, die der lichten Höhe der Nut 25 zwischen dem Nutgrund 27 und der Unterkante der Verengung im Bereich der Nutöffnung 26 entspricht.

Zur weiteren Verdrehsicherung genügt es, lediglich ein Sicherungsplättchen 28 in die bei ordnungsgemäß verbundenen Gehäusen 1 fluchtenden Nuten 25 zweier Gehäuse 1 einzusetzen. Ein solches Sicherungsplättchen 28 ist jedoch für die Sicherung der gegenseitigen Lage der einzelnen Gehäuse 1 nicht unbedingt erforderlich, da durch die Rastvertiefungen 14 und die Rastnasen 15 bereits eine sehr hohe Sicherheit gegen ein Verdrehen zweier miteinander verbundener Gehäuse 1 gegeben ist.

Die in der Fig. 1 dargestellten Gehäuse 1 sind lediglich Beispiele für Gehäuse für erfindungsgemäße Verteiler. So können die Gehäuse für die Endbereiche eines Verteilers auch an einer Stirnseite geschlossen sein, oder deren Ansätze zur Aufnahme von Einsätzen, wie eben Ventilen, Durchflußmesser oder Thermometer u.s.w. entsprechende den jeweiligen Erfordernissen gestaltet sein. Wesentlich ist dabei lediglich, daß sie entweder eine mit Ausnehmungen 9 versehene Erweiterung oder einen Ansatz 3 mit Nocken 7 aufweisen, um mit den Gehäuse 1 mittels eines Bajonettverschlusses 7, 9 verbindbar zu sein.

## Patentansprüche

1. Verteiler für Fluide, insbesondere für Heizanlagen, wobei der Verteiler mehrere miteinander kuppelbare Gehäuse (1), insbesondere zur Aufnahme von Ventilen, Durchflussmessern, Thermofühlern aufweist, wobei die Gehäuse (1) einen in axialer Richtung durchgehenden Hauptkanal (2) und mindestens einen mit diesem verbundenen Querkanal (16) aufweisen und mit einem in axialer Richtung des Hauptkanals (2) verlaufenden Ansatz (3) versehen sind, der in eine Erweiterung (4) des Hauptkanals (2) des angrenzenden Gehäuses (1) einsteckbar ist und dessen Mantelfläche (6) mindestens eine Aufnahme für einen Dichtring aufweist und wobei in der äußeren Mantelfläche der Gehäuse (1) in axialer Richtung des Hauptkanals (2) verlaufende und im Bereich der Stirnseiten offene weitere Ausnehmungen (25) vorgesehen sind, die durch Nuten gebildet sind, die im Bereich ihres Bodens eine geringfügig größere Breite aufweisen, als im Bereich ihrer Öffnung (26) und zur Aufnahme von elastisch verformbaren Sicherungsplättchen (28) dient, die sich über die Randzonen einander benachbarter Gehäuse (1) erstrecken **dadurch gekennzeichnet, dass** der Ansatz (3) mindestens einen radial abstehenden Nocken (7) trägt, der Teil eines Bajonettverschlusses (7,9) ist und mit Ausnehmungen (9) in der Innenwand (8) der Erweiterung (4) zusammenwirkt, wobei die Ausnehmungen (9) in axialer Richtung und annähernd in Umfangsrichtung verlaufende Abschnitte (10,11) aufweisen und die Sicherungsplättchen im Querschnitt durchgehend trapezförmig ausgebildet sind.

2. Verteiler nach Anspruch 1, **dadurch gekennzeichnet, dass** dass an den einander zugekehrten Stirnseiten (14, 12) zweier einander benachbarter Gehäuse (1) axial ausgerichtete Rastnasen (15) und Rastvertiefungen (13) angeformt bzw. eingearbeitet sind , die in der Verschlussstellung des Bajonettverschlusses (7,9) einrasten.

## Claims

1. A distributor for fluids, especially for heating systems, with the distributor comprising several mutually couplable housings (1), especially for receiving valves, flow meters and thermosensors, with the housings (1) comprising a main conduit (2) which is continuous in the axial direction and at least one transversal conduit (16) which is connected with the same and with a set-off (3) which extends in the axial direction of the main conduit (2) and which can be inserted into an extension (4) of the main conduit (2) of the adjacent housing (1) and whose jacket surface (6) comprises at least one receiving means for a ring gasket, and with further recesses (25) being provided in the outer jacket surface of the housing (1), which recesses extend in the axial direction of the main conduit (2) and are open in the region of the face sides and are formed by grooves which are provided in the region of their floor with a slightly larger width than in the region of their opening (26) and are used for receiving elastically deformable securing platelets (28) which extend over the edge zones of mutually adjacent housings (1), **characterized in that** the set-off (3) carries at least one radially projecting cam (7) which is part of a bayonet catch (7, 9) and cooperates with recesses (9) in the inner wall (8) of the extension (4), with the recesses (9) comprising sections (10, 11) which extend in the axial direction and approximately in the circumferential direction and the securing platelets are provided in the cross section with a consistently trapezoid shape.

2. A distributor as claimed in claim 1, **characterized in that** axially aligned latching noses (15) and latching recesses (13) are shaped on or incorporated in the mutually facing face sides (14, 12) of two mutually adjacent housings (1), which noses and recesses latch together in the latched position of the bayonet catch (7, 9).

## Revendications

1. Distributeur pour fluides, en particulier pour des installations de chauffage, lequel distributeur présente plusieurs boîtiers (1) pouvant être couplés entre eux, en particulier pour recevoir des vannes, des débitmètres, des sondes de température, les boîtiers (1) présentant un canal principal (2) continu dans le sens axial et au moins un canal transversal (16) relié à celui-ci et étant pourvus d'un épaulement (3) orienté dans le sens axial du canal principal (2), qui peut être emboîté dans un élargissement (4) du canal principal (2) du boîtier (1) voisin et dont la surface d'enveloppe (6) présente au moins un logement pour un joint d'étanchéité, et d'autres évidements (25) étant prévus dans la surface d'enveloppe extérieure des boîtiers (1), orientés dans le sens axial du canal principal (2) et ouverts au niveau de leurs faces frontales et formés par des gorges légèrement plus larges au niveau de leur fond qu'au niveau de leur ouverture (26) et servant à recevoir des plaquettes de sûreté (28) pouvant subir une déformation élastique qui s'étendent au-delà des zones de bord de boîtiers (1) voisins, **caractérisé en ce que** l'épaulement (3) porte au moins une came (7) dépassant dans le sens axial, qui fait partie d'une fermeture à baïonnette (7, 9) et qui coopère avec des évidements (9) dans la paroi intérieure (8) de l'élargissement (4), les évidements (9) présentant des parties (10, 11) orientées dans le sens axial et approximativement dans le sens de la circonférence et les plaquettes de sûreté étant de forme constamment trapézoïdale en section.

2. Distributeur selon la revendication 1, **caractérisé en ce que** des becs d'engagement (15) et des creux d'engagement (13) orientés dans le sens axial, qui se mettent en prise dans la position de fermeture de la fermeture à baïonnette (7, 9), sont moulés ou formés sur les faces frontales (14, 12) orientées l'une vers l'autre de deux boîtiers (1) voisins.
